Europäisches Patentamt

European Patent Office

Office européen des brevets

(11) Veröffentlichungsnummer: **0 305 659 B1**

# (12) EUROPÄISCHE PATENTSCHRIFT

(45) Veröffentlichungstag der Patentschrift: 09.10.91

(51) Int. Cl.5: **D21B 1/32**

(21) Anmeldenummer: 88108739.9

(22) Anmeldetag: 01.06.88

(54) **Verfahren zur Regelung der spezifischen Dispergierarbeit.**

(30) Priorität: 29.08.87 DE 3728890

(43) Veröffentlichungstag der Anmeldung:
08.03.89 Patentblatt 89/10

(45) Bekanntmachung des Hinweises auf die
Patenterteilung:
09.10.91 Patentblatt 91/41

(84) Benannte Vertragsstaaten:
**AT FR NL SE**

(56) Entgegenhaltungen:
**DE-A- 3 047 017**
**DE-A- 3 244 055**
**DE-C- 644 471**
**GB-A- 468 041**

**Wochenblatt für Papierfabrikation, Heft
7/1978, S.269-274**

(73) Patentinhaber: **SULZER-ESCHER WYSS GMBH**
**Escher Wyss-Strasse 25 Postfach 1380**
**W-7980 Ravensburg(DE)**

(72) Erfinder: **Beier, Dietmar**
**Einödstrasse 8**
**W-7981 Ravensburg-Obereschach(DE)**
Erfinder: **Gutzeit, Jürgen**
**Angerstrasse 83**
**W-7980 Ravensburg(DE)**
Erfinder: **Selder, Harald**
**Goethestrasse 16**
**W-7981 Schlier 1(DE)**

## Beschreibung

Die Erfindung bezieht sich auf ein Verfahren zum Dispergieren eines wässrigen Faserstoff-Materials, das Altpapier beinhaltet und durch einen Disperger geführt wird, dem eine Entwässerungsmaschine vorgeschaltet ist.

Bei der Herstellung von Papierprodukten auf modernen Papiermaschinen werden hohe Anforderungen an die Qualitätskonstanz (optische und technologische Konstanz) der auf die Papiermaschine gelangenden Stoffe gestellt. Während beim Einsatz von Primärrohstoffen (Frischzellstoff und Holzschliff) in der Regel die Qualitätskonstanz beherrschbar ist, stellen bei der Verarbeitung von Altpapier qualitative Schwankungen ein großes Problem dar.

Einer der Aufgaben des Aufbereitungsprozesses ist es, die über den Rohstoff Altpapier eingeschleusten qualitativen Schwankungen weitestgehend auszugleichen. Eine Verstärkung der Schwankungen durch den Aufbereitungsprozeß ist auf keinen Fall tolerierbar.

Bei modernen Altpapieraufbereitungsanlagen ist es üblich, im Anschluß an den Aufbereitungsprozeß den Altpapierstoff zu vergleichmäßigen, wobei die hierzu verwendeten Anlagen zumeist als Homogenisier- oder Dispergieranlagen bezeichnet werden. Ein Maß für den Dispergiereffekt ist dabei die Energiedichte, mit der das Material in der Homogenisier- bzw. Dispergiermaschine behandelt wird. Gleichzeitig werden durch diese Behandlung die papiertechnologischen Eigenschaften des fertigen Stoffes festgelegt. Ein solches Verfahren ist zum Beispiel aus der Publikation "Wochenblatt für Papierfabrikation", Heft 7/1978, Seiten 269 - 274, bekannt.

Aus betriebstechnischen Gründen ist es oft erforderlich, die Altpapieranlage mit unterschiedlichen Durchsatzmengen zu betreiben. Dies hat die nachteilige Folge, daß beim Dispergierprozeß mit ständig sich ändernder spezifischer Arbeit, d.h. Dispergierarbeit, bezogen auf den tatsächlichen Durchsatz, operiert wird. Der Grund hierfür ist der nicht lineare Zusammenhang zwischen Dispergerleistung und Dispergerdurchsatz. Daher läßt sich die spezifische Dispergierarbeit bei einer Durchsatzänderung nur dann konstant halten, wenn die Dispergierleistung nachkorrigiert wird. Es ergibt sich daraus eine

Erfindungsaufgabe, die in der Schaffung des Regelsystems besteht, mit dem Ziel, welches die Konstanthaltung der spezifischen Dispergierarbeit bei Durchsatzänderung ermöglicht. Die erfindungsgemäße Lösung dieser Aufgabe ist in dem Kennzeichen des Anspruches 1 dargestellt. Wenn erfindungsgemäß die Stoffdichte des zu verarbeitenden Materials eingestellt wird, bleibt die gewünschte Konstanz der spezifischen Dispergierarbeit bei einer Durchsatzänderung erhalten.

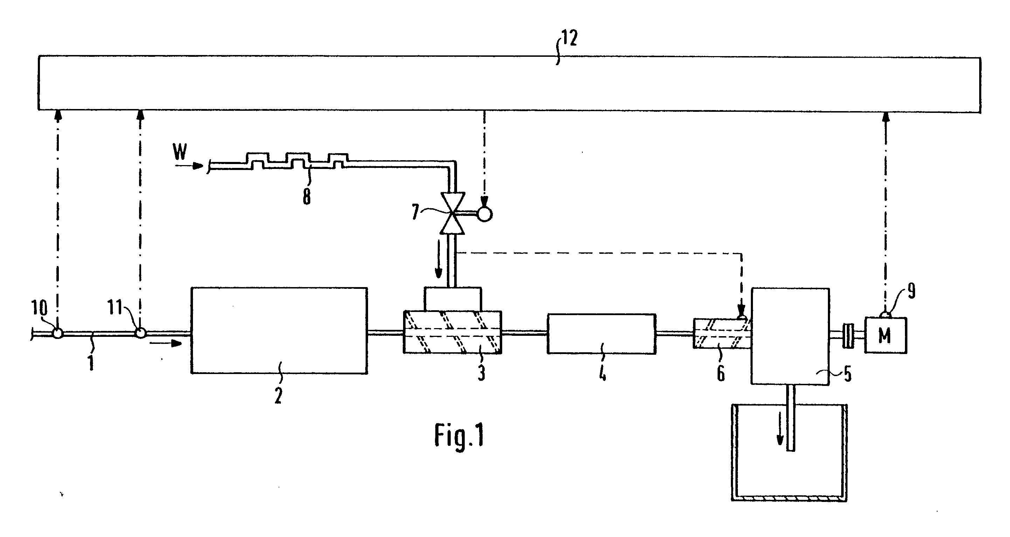

Im folgenden wird der Erfindungsgegenstand anhand einer schematischen Abbildung näher beschrieben und erklärt. Die Beschreibung bezieht sich auf eine Zeichnung (Fig. 1), die eine Anlage zur Durchführung des Verfahrens schematisch darstellt.

Bei dem Verfahren wird das zu dispergierende Material durch eine Leitung 1 in eine Entwässerungsmaschine 2 geführt. In dieser Entwässerungsmaschine wird das Material stärker entwässert, als es für den folgenden Prozess erforderlich wäre. Das entwässerte Material wird dann in eine Zerreißschnecke 3 übergeleitet und gelangt über eine Heizschnecke 4 zu dem Disperger 5. Die Einstellung der Stoffdichte durch die Zugabe des Verdünnungswassers W über ein einstellbares Ventil 7 kann z.B. in die Zerreißschnecke 3 erfolgen oder auf eine vorteilhaftere Weise an einer Stelle, die direkt nach der dem Disperger vorgeschalteten Eingabeschnecke 6 vorhanden ist. Von Vorteil ist es, wenn das Verdünnungswasser durch ein einstellbares Ventil unmittelbar vor dem Arbeitsbereich des Dispergers zugegeben wird . Um dabei eine nachteilige und unkontrollierte Temperaturänderung des zu dispergierenden Materials zu vermeiden, wird das Verdünnungswasser z.B. durch eine Erwärmvorrichtung 8 auf annähernd die Temperatur gebracht, mit der das Material in die Wasserzugabestelle eingeführt wird.

Die Zugabe des Verdünnungswassers wird gesteuert nach Ermittlung der Dispergierleistung in der Meßstelle 9 und des Durchsatzes des Materials durch die Anlage. Eine geeignete Stelle für das Messen des Durchsatzes ist vor der Entwässerungsmaschine 2 , wo der Volumenstrom und die Stoffdichte des in die Entwässerungsmaschine 2 durch die Leitung 1 geführten Materials gemessen werden, woraus sich der Durchsatz errechnet. In Fig. 1 sind diese Meßstellen mit den Bezugszeichen 10 und 11 versehen. Das Einstellen der Stoffdichte des zu dispergierenden Materials erfolgt mit einer zeitlichen Verzögerung, die durch den Abstand zwischen der erwähnten Meßstelle vor der Entwässerungsmaschine und der Zugabestelle für das Verdünnungswasser bedingt ist. Zusätzlich wird regeltechnisch auch die Stofftransportzeit zwischen der Zugabestelle für das Verdünnungswasser und dem Disperger berücksichtigt. Vorteilhafterweise wird die beschriebene Totzeitkompensation mit einer mikroprozessor-gesteuerten Regelstrecke 11 vorgenommen. In dem Falle, wo das Verdünnungswasser direkt unmittelbar vor dem Arbeitsbereich des Dispergers zugegeben wird, ergibt sich die erwähnte zeitliche Verzögerung lediglich aus dem Abstand zwischen Meßstelle des Durchsatzes und dem Disperger.

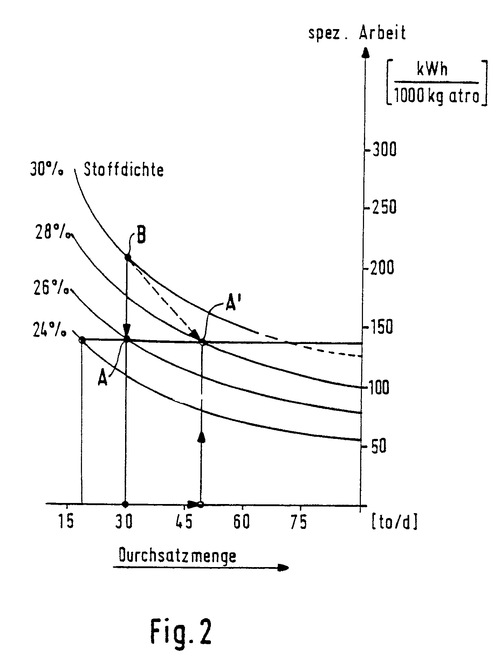

In einer weiteren Zeichnung (Fig. 2) wird das Betriebsverhalten des Dispergers mit Hilfe einer Grafik dargestellt, die an einem Beispiel den Zusammenhang zwischen Durchsatzmenge, Stoffdichte und spezifischer Arbeit angibt. Damit läßt sich auch ein Verfahrensbeispiel zeigen, in dem bei einem angenommenen Durchsatz von 30 to/Tag eine spezifische Arbeit von 135 kWh/1000 kg atro übertragen werden soll. Es ergibt sich dann ein Dispergierarbeitspunkt A. Oberhalb dieses Arbeitspunktes ist ein anderer Punkt B in dem Diagramm eingezeichnet, der darstellt, in welchem Maße mehr entwässert wird, als das in dem Prozess notwendig wäre und der der Ausgangspunkt für den Verdünnungsvorgang ist. Aus dieser Darstellung ergibt sich eine Korrekturstrecke, entlang welcher dann das Verdünnungswasser dem zu verarbeitenden Material zugegeben wird, wobei die Stoffdichte auf den Wert des Arbeitspunktes A absinkt. Durch das erfindungsgemäße Verfahren wird bei verändertem Durchsatz eine vom bisherigen Arbeitspunkt abweichende, aber unterhalb des Ausgangspunktes B liegende Stoffdichte eingestellt, bei der mit der gleichen spezifischen Arbeit dispergiert wird, wobei verständlicherweise die Grenzen der Anlage - wie z.B. maximale Dispergerleistung, Aufheizung und Transport des Materials - zu berücksichtigen sind. In Fig. 2 ist ein so gefundener, neuer Arbeitspunkt als A' bezeichnet.

Das erfindungsgemäße Verfahren kann ohne weiteres auch dann angewendet werden, wenn Schwankungen weiterer Größen, die den Dispergierprozeß beeinflussen, vorliegen, Es ist in der Praxis beispielsweise zu beobachten, daß auch bei konstant gehaltenem Durchsatz infolge von Qualitätsschwankungen des eingesetzten Altpapieres sich die Dispergerleistung verändert. Das würde zu einer Änderung auch der spezifischen Dispergierarbeit führen. Mit Hilfe der vorliegenden Erfindung ist auch in diesem Falle eine Fahrweise gewährleistet, bei der mit konstanter spezifischer Dispergierarbeit operiert wird. Die spezifische Arbeit ist in diesem Fall nämlich die Regelgröße, d.h. daß innerhalb des Arbeitsbereiches des Regelkreises die spezifische Arbeit konstant gehalten wird, unabhängig davon, durch welche Einflußgrössen die Schwankungen entstanden sind.

## Patentansprüche

1. Verfahren zum Dispergieren eines Materials, das Altpapier beinhaltet, indem einem Disperger (5) eine Entwässerungsmaschine(2) vorgeschaltet ist, dadurch gekennzeichnet, daß die aus der Zusammensetzung des Materials zur Erreichung der gewünschten Qualität sich ergebende spezifische Arbeit des Dispergers(5) konstant gehalten wird durch Einstellung der Stoffdichte des zu dispergierenden Materials und zwar derart, daß in der Entwässerungsmaschine (2) stärker entwässert wird, als der Prozeß es erfordert und daß die Stoffdichte des Materials vor dem Disperger durch Zugabe von Verdünnungswasser eingestellt wird.

2. Verfahren nach Anspruch 1, dadurch gekennzeichnet, daß zwischen der Entwässerungsmaschine(2) und dem Disperger (5) eine Zerreißmaschine (3) und eine folgende Heizschnecke (4) angeordnet sind, wobei das Verdünnungswasser über ein einstellbares Ventil (7) vor dem Eintritt des Materials in die Heizschnecke (4) zugegeben wird.

3. Verfahren nach Anspruch 2, dadurch gekennzeichnet, daß das Verdünnungswasser dem Material in der Zerreißmaschine (3) zugegeben wird.

4. Verfahren nach Anspruch 1 bzw. 2, dadurch gekennzeichnet, daß das Verdünnungswasser dem Material direkt nach der dem Disperger (5) vorgeschalteten Eingabeschnecke (6) zugegeben wird.

5. Verfahren nach Anspruch 4, dadurch gekennzeichnet, daß das Verdünnungswasser durch ein einstellbares Ventil unmittelbar vor dem Arbeitsbereich des Dispergers dem Material zugegeben wird.

6. Verfahren nach Anspruch 1, dadurch gekennzeichnet, daß die Zugabe des Verdünnungswassers nach Ermitteln der Dispergerleistung und des Durchsatzes des Materials durch die Anlage gesteuert wird. Materials durch die Anlage gesteuert wird.

7. Verfahren nach Anspruch 6,dadurch gekennzeichnet, daß der Durchsatz durch Messen des Volumenstromes und der Stoffdichte vor der Entwässerungsmaschine (2) ermittelt wird und daß das Einstellen der Stoffdichte des zu dispergierenden Materials mit zeitlicher Verzögerung vorgenommen wird, die sich einerseits aus dem Abstand zwischen der Meßstelle und der Wasserzugabestelle und andererseits zwischen der Meßstelle und dem Disperger ergibt.

8. Verfahren nach Anspruch 1, dadurch gekennzeichnet, daß das Verdünnungswasser auf die Temperatur gebracht wird, die annähernd der des Stoffes an der Zugabestelle entspricht.

## Claims

1. Method for dispersing an aqueous fibrous material which contains waste paper and is passed through a disperser (5) which is preceded by a dewatering machine (2), characterised in that the specific power of the disperser (5) yielded by the composition of the material to achieve the desired quality is kept constant by adjusting the consistency of the material to be dispersed, and in such a manner that dewatering is carried out in the dewatering machine (2) to a higher consistency than is necessary for dispersion with the desired specific power under the conditions present, and that the consistency of the material is set before the disperser by the addition of dilution water.

2. Method according to Claim 1, characterised in that a shredder machine (3) and a subsequent heating worm (4) are disposed between the dewatering machine (2) and the disperser (5), the dilution water being added via an adjustable valve (7) before the material enters the heating worm (4).

3. Method according to Claim 2, characterised in that the dilution water is added to the material in the shredder machine (3).

4. Method according to Claim 1 or 2, characterised in that the dilution water is added to the material directly after the charging worm (6) which precedes the disperser (5).

5. Method according to Claim 4, characterised in that the dilution water is added to the material through an adjustable valve directly before the region of operation of the disperser.

6. Method according to Claim 1, characterised in that the addition of the dilution water is controlled after determining the dispersing power and the throughput rate of the material through the installation.

7. Method according to Claim 6, characterised in that the throughput rate is determined by measuring the volume flow and the consistency before the dewatering machine (2) and that the setting of the consistency of the material to be dispersed is carried out with a time delay which is yielded firstly from the distance between the measuring point and the water addition point and secondly between the measuring point and the disperser.

8. Method according to Claim 1, characterised in that the dilution water is brought to the temperature which corresponds approximately to that of the material at the addition point.

## Revendications

1. Procédé de dispersion d'une matière fibreuse aqueuse contenant du vieux papier, conduit à travers un disperseur (5) en avant duquel est branchée une machine à déshydrater (2), **caractérisé** en ce que l'on maintient constant le travail spécifique du disperseur (5) résultant de la composition de la matière requise pour obtenir la qualité désirée, par réglage de la concentration de la matière à disperser, et ceci de telle sorte que, dans la machine à déshydrater (2), on déshydrate jusqu'à une concentration de matière plus grande que celle nécessaire pour la dispersion avec le travail spécifique souhaité en présence des conditions existantes, et en ce que la concentration de la matière est ajustée en amont du disperseur par une addition d'eau de dilution.

2. Procédé selon la revendication 1, caractérisé en ce qu'une machine déchiqueteuse (3) et une vis chauffante (4) faisant suite à celle-ci sont disposées entre la machine à déshydrater (2) et le disperseur (5), l'eau de dilution étant ajoutée par une vanne réglable (7) en amont de l'entrée de la matière dans la vis chauffante (4).

3. Procédé selon la revendication 2, caractérisé en ce que l'eau de dilution est ajoutée à la matière dans la machine déchiqueteuse (3).

4. Procédé selon les revendications 1 et/ou 2, caractérisé en ce que l'eau de dilution est ajoutée à la matière directement après la vis d'alimentation (6) disposée en amont du disperseur (5).

5. Procédé selon la revendication 4, caractérisé en ce que l'eau de dilution est ajoutée à la matière par une vanne réglable, directement en amont de la zone de travail du disperseur.

6. Procédé selon la revendication 1, caractérisé en ce que l'addition de l'eau de dilution est commandée d'après la mesure de la puissance de dispersion et du débit de la matière passant dans l'installation.

7. Procédé selon la revendication 6, caractérisé en ce que le débit est déterminé par mesure du débit volumétrique et de la concentration de la matière en amont de la machine à déshydrater (2) et en ce que le réglage de la concentration de la matière à disperser est effectué avec un délai qui résulte de la distance, d'une part entre le point de mesure et l'endroit où a lieu l'apport d'eau, et d'autre part entre le point de mesure et le disperseur.

8. Procédé selon la revendication 1, caractérisé en ce que l'eau de dilution est portée à une température qui correspond à peu près à celle de la matière à l'endroit où a lieu l'addition d'eau.

Fig.1

W

EP 0 305 659 B1

Fig.2